# EUROPEAN PATENT SPECIFICATION

(11) **EP 0 692 363 B1**
(45) Date of publication and mention of the grant of the patent: **03.05.2000**
(21) Application number: 95109807.8
(22) Date of filing: 23.06.1995
(51) Int. Cl.: B29C 47/20, B29C 47/06

(54) **Coextrusion head for blow-thermoforming machines with rapid changing of the coloured layers of the extruded plastic**
Coextrusionskopf für Blas-Warmformmaschinen, mit Schnellwechselmöglichkeit der extrudierten gefärbten Schichten
Tête de co-extrusion pour machine de thermoformage par soufflage, avec changement rapide de couches colorées extrudées

(30) Priority: 14.07.1994 IT BO940331
(43) Date of publication of application: 17.01.1996
(73) Proprietor: TECHNE S.P.A., 40068 San Lazzaro di Savena (Bologna) (IT)
(72) Inventor: Minghetti, Moreno, I-40138 Bologna (IT)
(74) Representative: Porsia, Attilio, Dr.

(56) References cited:
- EP-A- 0 255 043
- WO-A-90/11880
- WO-A-94/04341
- FR-A- 2 187 506
- GB-A- 2 109 740
- US-A- 2 734 224
- US-A- 3 947 173
- US-A- 4 017 240

## Description

In known methods of coextruding thermoplastic materials there is a problem in changing the colour of the plastic tube or "parison", as it is known, made up of a number of coextruded and coaxial layers of plastic which will then be formed by a blowing process into containers. The most recent market trend is to produce multilayer containers because the middle layer, which represents about 50% of the thickness of the walls of the container, can be made of recycled plastic, and because it is possible to limit the required coloration to the outer layer only, which represents about 25% of the thickness of the walls, thereby using less colouring material and significantly reducing the cost of the container.

Added to this situation is the fact that the current trend among some large industries producing and selling liquid cleaning and hygiene products for house and person is to pack these products in bottles of identical shape, their different contents being distinguished by different external colours. This permits a major economy in the cycle of producing, filling, closing, labelling and packing the bottles, which can be carried out on identical machines. However, this very situation necessitates rapid changing of the colour of the extruded parison, a problem that has still not been solved inasmuch as when the colour is being changed, the parison tends to retain a stripe of the previous colour located roughly opposite the point at which the plastic enters the coextrusion head, and this stripe, which gradually becomes thinner but is still unacceptable from the point of view of product quality control, lingers for anything from eighteen to twenty-four hours, especially when the change is from a dark colour to a light colour and when fluorescent pigments are involved. Furthermore, the alternative of dismantling the extrusion head and cleaning it or replacing it with a new head takes equally large amounts of time and money.

From GB-A-2 109 740 an extrusion head is known for the extrusion in horizontal plane of an annular plastic coating around a rigid elongated article.

In order to solve this problem, attempts have been made to understand the causes that lie behind the problems described above in the use of known coextrusion heads. In these heads, each layer of plastic is introduced through a point in an annular collector of broad cross section, with the downward annular gap in which one layer of the parison is formed leading away from this. As the plastic arrives in this collector it divides into two preferential streams which meet up again after a journey of approximately 180° from the point of entry; and at this point and in the upper part of the collector it is very likely that there are passive resistances which encourage stagnation of the material and which produce the problems described above. It is an object of the invention to solve this technical problem by means of the following solution.

The abovementioned collector is eliminated. The channel that feeds the plastic into the part of the coextrusion head involved in forming the final layer of the parison, between the plug and the die of this part, divides into two or more suitably radiused descending channels that continue in the form of identical fan-shaped channels which diverge in the downward direction, are of decreasing depth and open out to communicate with each other at the annular site of greatest diameter of the terminal conical part, converging in the downward direction, of the annular path of the head from which emerges the outer layer of the multi-layer coextruded parison. The passive resistances are thus minimized and the amount of time required to change the colour is made much less than in the prior art, being brought down to around thirty-five minutes.

Other characteristics of the invention, and the advantages which flow therefrom, will be made clear in the following description of a preferred embodiment of the invention illustrated purely by way of a non-limiting example in the figures of the three attached sheets of drawings, in which:
- Fig. 1 is a lateral elevation of the plug of a coextrusion head designed to form the final and outer layer of the multilayer coextruded parison;
- Figs. 2 and 3 are lateral elevations of the plug shown in Figure 1, the former being viewed in the direction of arrow K2 and the latter in the direction of arrow K3;
- Fig. 4 is a lateral elevation of the plug shown in Figure 2, viewed in the direction indicated by arrow K4;
- Fig. 5 is a development onto a plane of the same plug as in the above figures;
- Fig. 6 shows the end portion of a coextrusion head fitted with the plug seen in the above figures, in longitudinal section;
- Figs. 7 and 8 show respective details of the plug viewed in section on VII-VII and VIII-VIII as marked in Figures 1 and 2; and
- Fig. 9 shows the development onto a plane of the plug in an alternative embodiment.

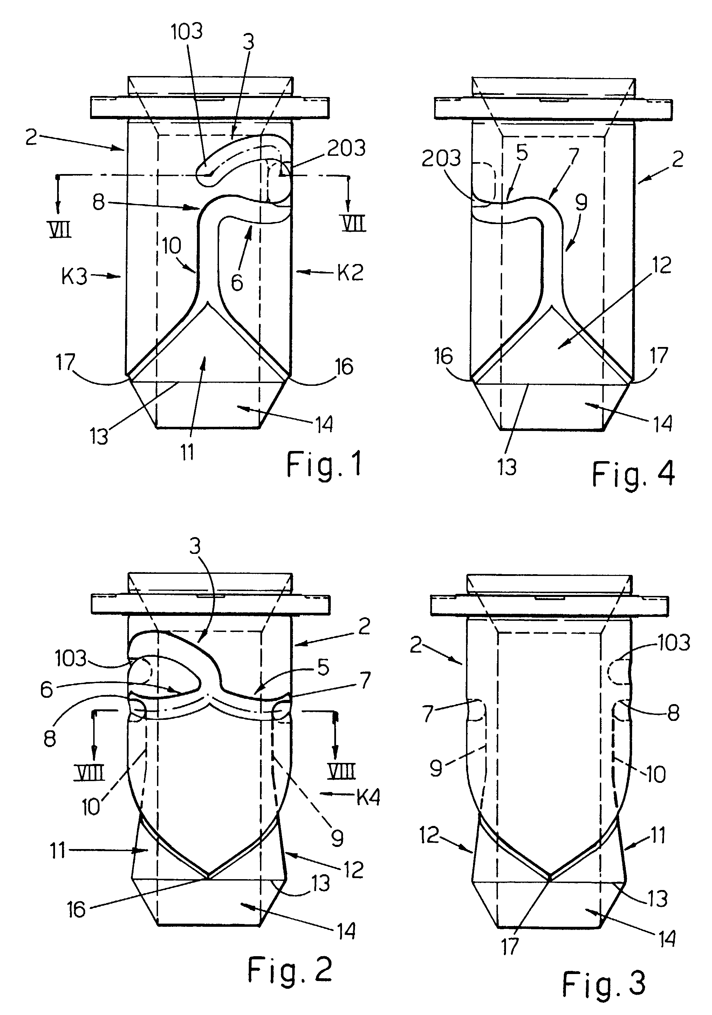

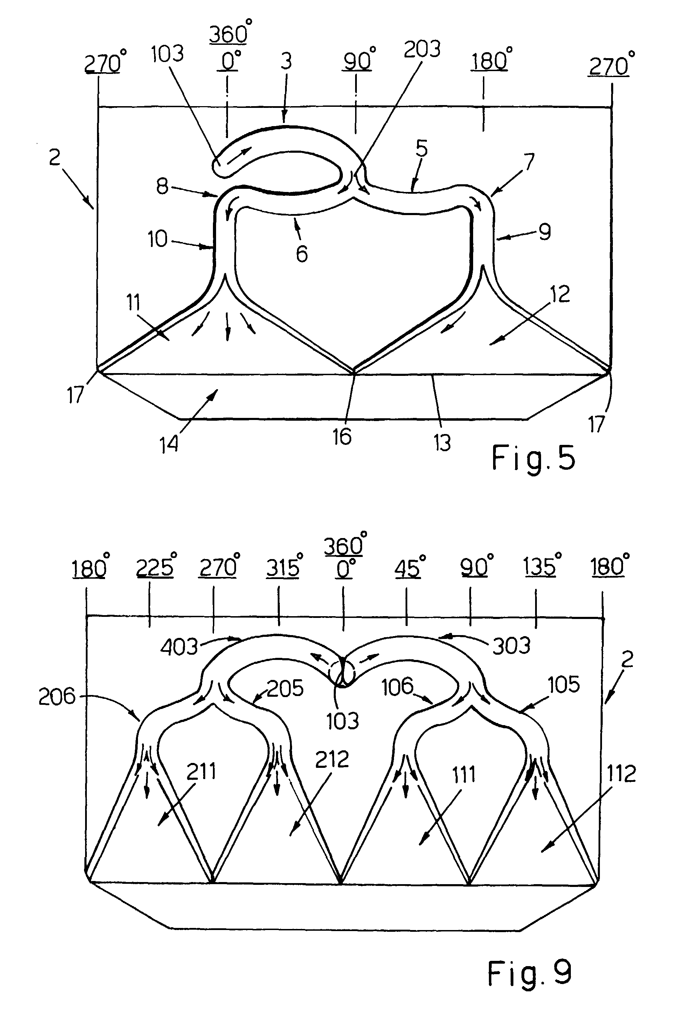

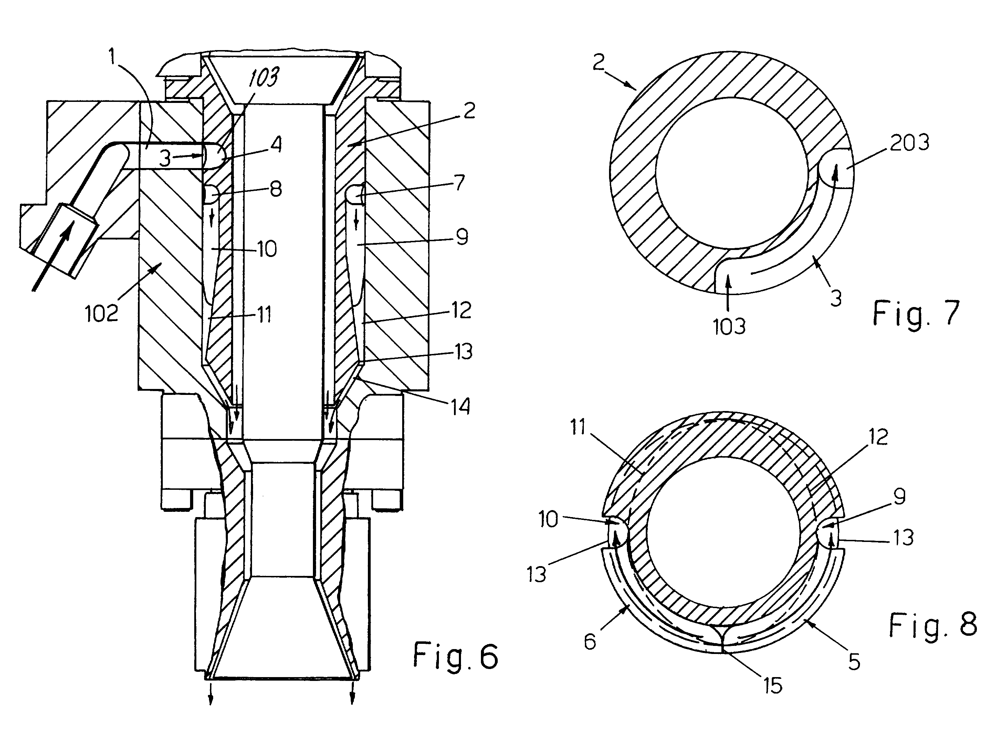

It will be seen from the drawings that the plastic from which the outer layer of the multilayer parison is to be formed is pushed out of the extruder (Figs. 1, 5, 6, 7) and through the passage 1 formed in the body 102 of the die (Fig. 6) into the end 103 of a channel 3 let into the lateral surface of the plug 2 and closed on its external side by the body 102 of this die, said channel 3 having a suitably radiused inner wall 4 and being characterized by a very open parabolic curve, of which the vertex lies on a substantially horizontal axis with the convex side uppermost (Fig. 5). The final end 203 of the channel 3 is situated at an angle of 90° from the initial end 103. Purely as a non-restricting example, in a plug 2 with an external diameter of 80 mm, good results have been obtained with a channel 3 approximately 12 mm wide and approximately 11.5 mm deep.

At its end 203, the feed channel 3 divides up , with suitably radiused connections, into two identical channels 5 and 6 that are curved in the form of very open parabolas and are likewise arranged so that their vertices are on a substantially horizontal axis, while their convex sides are downmost: after passing through an angle of 90° around the lateral surface of the plug they curve downwards through generously radiused identical portions 7, 8 leading into identical vertical downward channels 9, 10 separated from each other by an angular distance of 180°. It may be observed, purely by way of indication, that, still assuming that a plug 2 has an external diameter of 80 mm, the bifurcating channels 5, 7, 9 and 6, 8, 10 are each approximately 6 mm wide and their depth decreases from approximately 11.5 mm at their starting points to approximately 9 mm at their end points.

The channels 9 and 10 continue downwards in the form of identical and symmetrical open, fan-shaped channels 11, 12 which terminate with a 180° aperture at the site 13 of greatest diameter of the annular conical mouth 14, converging in the downward direction, of the plug-die assembly, preferably slightly before this mouth, as shown in Figures 3, 5 and 8. Still assuming the dimensions to be as indicated above, the fan-shaped channels 11, 12 gradually decrease in depth in the downward direction from approximately 9 mm at the top to approximately 2.25 mm at the bottom.

The outer edge of the channels described above, which is in contact with the die 102, and also the edge 15 of the branches 5, 6 and the edges 16, 17 where the fan-shaped channels 11, 12 meet each other, are sharp and without burrs, whereas the edges of the inner wall of the channel, the surfaces and the junctions between the channels, are suitably radiused and polished.

The operation of the coextrusion head as thus conceived is simple and obvious. After travelling through the parabolic channel 3, the plastic arrives with very nearly the ideal unturbulent descending orientation at the point of bifurcation 203 where it divides into two equal parts in channels 5, 7, 9 and 6, 8, 10 which feed into the fan-shaped channels 11, 12. The streams of plastic which emerge from the fan-shaped channels meet up again at the conical converging mouth 14 and emerge from the latter to form the outer layer of the multilayer parison produced by the present coextrusion head. It is clear to see that all the channels for the conveyance of the plastic are without points of motionlessness and are characterized by very limited passive resistances, thus tending to the complete flushing out of these channels by a subsequent stream of differently coloured plastic, within a period of some fifty minutes, a period which can be further reduced if the change-over is from a light colour to a dark colour and if a purge is carried out by extruding at different speeds.

It will be understood that by means of the same technique as described here, it is possible to construct the plug-die assembly for extruding the intermediate layer or layers of a multilayer coextruded parison, if this layer or these layers are also to be coloured. It will be understood that the description has made reference to a preferred embodiment of the invention, which can be varied and modified in many ways, especially from the point of view of construction, for example in order to reduce the passive resistances, with special shaping of the junctions and curves of the channels.

As shown in the variant depicted in Figure 9, it is possible to have, branching off symmetrically from the point 103 where the plastic enters, two identical channels 303, 403, identical to the channel 3 already considered but opposite each other and dividing up after extending through an arc of 90° into pairs of identical opposite channels 105, 106 and 205, 206 which flow into the fan-shaped channels 111, 112 and 211, 212. The latter, unlike the earlier channels 11, 12, being more in number, open out much less sharply and more gradually to an aperture of 90°, and will therefore give rise to fewer passive resistances.

## Claims

1. Coextrusion head for blow-thermoforming machines, comprising a plug (2) and die (102) assembly characterised in that the extrusion takes place in a vertical plane through a conical discharge mouth (14) of plastics parisons formed by a plurality of coextruded plastics layers comprising at least one outer colored layer, and that in the assembly formed by the plug (2) and the die (102) for the extrusion of the coloured layer on the concurrently extruded multilayers parison, there are at least two longitudinal fan-shaped paths (11, 12) which diverge in the downward direction and are identical and symmetrically arranged, and which open out and meet each other at the annular upper part of the conical discharge mouth (14) of said assembly, the apexes of said fan-shaped paths being angularly equidistant from each other and connected, by symmetrical bifurcating channels (5, 7, 9 and 6, 8, 10), to the point (103) of entry of the plastic into the head.

2. Coextrusion head according to Claim 1, characterized in that the upper ends of the fan-shaped paths (11, 12) are connected to straight vertical channels (9, 10) which are connected by large radiuses (7, 8) to the respective ends of identical parabolic channels (5, 6), with their vertices substantially horizontal and with their convex side downmost, while the consecutive ends of these channels are connected by a suitably radiused bifurcation (203) to a single channel (3) through which the plastic is fed.

3. Coextrusion head according to Claim 2, in which the channel (3) through which the plastic is fed to the bifurcation (203) of the channels that feed the final fan-shaped channels (11, 12), is of substantially parabolic shape with its vertex on a substantially horizontal axis and with its convex side uppermost.

4. Coextrusion head according to Claim 3, in which the length of the first parabolic channel (3) through which the plastic is fed is such that it extends around the head through an arc of 90°.

5. Coextrusion head according to the previous claims, characterized in that the bifurcating channels (5, 7, 9 and 6, 8, 10) that feed the fan-shaped channels (11, 12) are half as wide as the first feed channel (3) and their depth decreases gradually in the direction of flow of the extruded plastic, and the depth of said fan-shaped channels also decreases gradually in the downward direction.

6. Coextrusion head according to Claim 5, characterized in that if the plug bearing the aforesaid channels through which the plastic is conveyed has an external diameter of approximately 80 mm, the first parabolic channel (3) has a width of approximately 12 mm and an approximately equal or slightly smaller depth, for example of approximately 11.5 mm, while the bifurcating channels (5, 7, 9 and 6, 8, 10) are approximately 6 mm wide and decrease in depth from 11.5 mm to 9 mm approximately, and the fan-shaped channels (11, 12) decrease in depth from 9 mm to 2.25 mm approximately.

7. Coextrusion head according to the previous claims, in which the inner walls and edges of the inner walls of the channels through which the plastic is conveyed are suitably radiused, all the walls of the channels are polished and the edges where these channels meet the die (102), and also the lower edge (15) of the bifurcation and the lower edges (16, 17) where the fan-shaped channels (11, 12) meet each other, are sharp and free of burrs.

8. Coextrusion head according to the previous claims, characterized in that in an alternative embodiment the fan-shaped channels are four in number (111, 112 and 211-212) and are connected by respective bifurcating channels (105, 106 and 205, 206) to two parabolic channels (303, 403) which join up at the point (103) where the plastic enters the head; all of this being in order further to limit the passive resistances in these fan-shaped channels, by virtue of their limited slope.

## Patentansprüche

1. Koextrusionskopf für Blasformmaschinen mit einem Aufbau aus Dorn (2) und Düse (102), **dadurch gekennzeichnet,** daß die Extrusion der durch eine Mehrzahl koextrudierter Kunststoffschichten gebildeten Kunststoffvorformlinge mit wenigstens einer äußeren gefärbten Schicht in einer senkrechten Ebene durch eine konische Austrittsmündung (14) stattfindet und in dem aus dem Dorn (2) und der Düse (102) bestehenden Aufbau für die Extrusion der gefärbten Schicht auf den parallel extrudierten Mehrschicht-Vorformling wenigstens zwei fächerförmige Längspfade (11, 12) vorhanden sind, die sich in der Abwärtsrichtung aufweiten, identisch und symmetrisch ausgebildet sind und sich an dem ringförmigen oberen Bereich der konischen Austrittsmündung (14) des Aufbaus öffnen und treffen, wobei die Scheitelpunkte der fächerförmigen Pfade in gleichem Winkelabstand zueinander liegen und durch symmetrische Zweigkanäle (5, 7, 9 und 6, 8, 10) mit der Eintrittsstelle (103) des Kunststoffes in den Kopf verbunden sind.

2. Koextrusionskopf nach Anspruch 1, **dadurch gekennzeichnet,** daß die oberen Enden der fächerförmigen Pfade (11, 12) mit geraden, senkrechten Kanälen (9, 10) verbunden sind, die über große Radien (7, 8) mit den entsprechenden Enden identischer parabelförmiger Kanäle (5, 6) in Verbindung stehen, deren Scheitel im wesentlichen horizontal und deren konvexe Seiten unten liegen, während die anschließenden Enden dieser Kanäle durch eine geeignet abgerundete Gabelung (203) mit einem einzelnen Kanal (3) verbunden sind, durch welchen der Kunststoff zugeführt wird.

3. Koextrusionskopf nach Anspruch 2, **dadurch gekennzeichnet,** daß der Kanal (3), durch welchen der Kunststoff zu der Gabelung (203) der Kanäle, welche die abschließenden fächerförmigen Kanäle (11, 12) versorgen, zugeführt wird, eine im wesentlichen parabolische Form besitzt, deren Scheitel auf einer im wesentlichen horizontalen Achse und deren konvexe Seite oben liegt.

4. Koextrusionskopf nach Anspruch 3, **dadurch gekennzeichnet,** daß die Länge des ersten parabelförmigen Kanals (3), durch welchen der Kunststoff zugeführt wird, so gewählt ist, daß dieser sich durch einen Bogen von 90° um den Kopf herum erstreckt.

5. Koextrusionskopf nach einem der vorhergehenden Ansprüche, **dadurch gekennzeichnet,** daß die Zweigkanäle (5, 7, 9 und 6, 8, 10), welche die fächerförmigen Kanäle (11, 12) versorgen, halb so breit wie der erste Versorgungskanal (3) sind und sich ihre Tiefe nach und nach in der Strömungsrichtung des extrudierten Kunststoffes verringert, und sich auch die Tiefe der fächerförmigen Kanäle in der Abwärtsrichtung nach und nach verringert.

6. Koextrusionskopf nach Anspruch 5, **dadurch gekennzeichnet,** daß der erste parabelförmige Kanal (3), wenn der Dorn, der die zuvor erwähnten Kanäle trägt, durch welche der Kunststoff gefördert wird, einen Außendurchmesser von ungefähr 80 mm besitzt, eine Breite von ungefähr 12 mm und eine ungefähr gleiche oder etwas kleinere Tiefe, z. B. 11,5 mm, aufweist, während die Zweigkanäle (5, 7, 9 und 6, 8, 10) ungefähr 6 mm breit sind und in der Tiefe ungefähr von 11,5 mm auf 9 mm abnehmen, und sich die fächerförmigen Kanäle (11, 12) in der Tiefe ungefähr von 9 mm auf 2,25 mm verkleinern.

7. Koextrusionskopf nach einem der vorhergehenden Ansprüche, **dadurch gekennzeichnet,** daß die Innenwände und Kanten der Innenwände der Kanäle, durch welche der Kunststoff gefördert wird, in geeigneter Weise abgerundet, alle Wandungen der Kanäle poliert und die Kanten, wo diese Kanäle die Düse (102) treffen, und auch die unteren Kanten (15) der Gabelung und die unteren Kanten (16, 17), wo die fächerförmigen Kanäle (11, 12) sich treffen, spitz und frei von Graten sind.

8. Koextrusionskopf nach einem der vorhergehenden Ansprüche, **dadurch gekennzeichnet**, daß bei einer alternativen Ausführungsform vier fächerförmige Kanäle (111, 112 und 211, 212) vorgesehen sind, die durch entsprechende Zweigkanäle (105, 106 und 205, 206) mit zwei parabelförmigen Kanälen (303, 403) verbunden sind, die sich an der Stelle (103) vereinigen, wo der Kunststoff in den Kopf eintritt, wobei alles dies erfolgt, um die passiven Widerstände in den fächerförmigen Kanälen kraft ihrer limitierten Schrägen einzugrenzen.

## Revendications

1. Tête de coextrusion destinée à des machines de thermoformage-soufflage, comprenant un ensemble de bouchon (2) et de filière (102), caractérisée en ce que l'extrusion se produit dans un plan vertical par l'intermédiaire d'une embouchure d'évacuation conique (14) de paraisons de matière plastique formées d'une pluralité de couches de matières plastiques coextrudées comprenant au moins une couche colorée externe, et en ce que dans l'ensemble formé par le bouchon (2) et la filière (102) destiné à l'extrusion de la couche colorée de la paraison à couches multiples extrudées conjointement, il existe au moins deux trajets longitudinaux en éventail (11, 12) qui divergent vers le bas et sont identiques et agencés de façon symétrique, et qui s'ouvrent et se rejoignent l'un l'autre au niveau de la partie supérieure annulaire de l'embouchure d'évacuation conique (14) dudit ensemble, les sommets desdits trajets en éventail étant angulairement équidistants l'un de l'autre et reliés par des canaux de bifurcation symétriques (5, 7, 9 et 6, 8, 10), au point (103) d'entrée de la matière plastique dans la tête.

2. Tête de coextrusion selon la revendication 1, caractérisée en ce que les extrémités supérieures des canaux en éventail (11, 12) sont reliées aux canaux verticaux droits (9, 10) qui sont reliés par des rayons importants (7, 8) aux extrémités respectives de canaux paraboliques identiques (5, 6), leurs sommets étant pratiquement horizontaux et leur côté convexe étant le plus bas, tandis que les extrémités suivantes de ces canaux sont reliés par une bifurcation (203) présentant un rayon approprié à un canal unique (3) par l'intermédiaire duquel la matière plastique est alimentée.

3. Tête de coextrusion selon la revendication 2, dans laquelle le canal (3) par l'intermédiaire duquel la matière plastique est alimentée vers la bifurcation (203) des canaux qui alimente les canaux finaux en éventail (11, 12), est de forme pratiquement parabolique, son sommet se situant sur un axe pratiquement horizontal et son côté convexe étant le plus haut.

4. Tête de coextrusion selon la revendication 3, dans laquelle la longueur du premier canal parabolique (3) à travers lequel la matière plastique est alimentée est tel qu'il s'étend autour de la tête sur un arc de 90°.

5. Tête de coextrusion selon les revendications précédentes, caractérisée en ce que les canaux de bifurcation (5, 7, 9 et 6, 8, 10) qui alimentent les canaux en éventail (11, 12) sont d'une largeur moitié de celle du premier canal d'alimentation (3) et leur profondeur diminue progressivement dans le sens d'écoulement de la matière plastique extrudée, et la profondeur desdits canaux en éventail diminue également de façon progressive dans la direction vers le bas.

6. Tête de coextrusion selon la revendication 5, caractérisée en ce que le bouchon portant les canaux cités ci-dessus, par l'intermédiaire desquels la matière plastique est acheminée présente un diamètre extérieur d'approximativement 80 mm, le premier canal parabolique (3) présente une largeur d'approximativement 12 mm et une profondeur approximativement égale ou légèrement plus faible, par exemple d'approximativement 11,5 mm, tandis que les canaux de bifurcation (5, 7, 9 et 6, 8, 10) sont d'approximativement 6 mm de largeur et diminuent de profondeur de 11,5 mm à 9 mm approximativement, et les canaux en éventail (11, 12) diminuent de profondeur de 9 mm à 2,25 mm approximativement.

7. Tête de coextrusion selon les revendications précédentes, dans laquelle les parois internes et les bords des parois internes des canaux par l'intermédiaire desquels la matière plastique est acheminée présentent un rayon approprié, toutes les parois des canaux sont polies et les bords où ces canaux rejoignent la filière (102), ainsi qu'également le bord inférieur (15) de la bifurcation et les bords inférieurs (16, 17) où les canaux en éventail (11, 12) se rejoignent, sont vifs et dépourvus de bavures.

8. Tête de coextrusion selon les revendications précédentes, caractérisée en ce que dans un mode de réalisation en variante, les canaux en éventail sont au nombre de quatre (111, 112 et 211, 212) et sont reliés par des canaux de bifurcation respectifs (105, 106 et 205, 206) à deux canaux paraboliques (303, 403) qui se rejoignent au niveau du point (103) où la matière plastique pénètre dans la tête, l'ensemble de ceux-ci étant destiné en outre à limiter les résistances passives dans ces canaux en éventail, grâce à leur pente limitée.
